## Europäisches Patentamt
## European Patent Office
## Office européen des brevets

(11) Publication number: **0 088 816**
**B1**

(12) # EUROPEAN PATENT SPECIFICATION

(45) Date of publication of patent specification: **06.11.85**

(51) Int. Cl.⁴: **B 23 P 11/00, F 01 L 1/04**

(21) Application number: **82102154.0**

(22) Date of filing: **16.03.82**

(54) Method for fixing an annular element onto a shaft and a shaft assembly obtained by such method.

(43) Date of publication of application:
**21.09.83 Bulletin 83/38**

(45) Publication of the grant of the patent:
**06.11.85 Bulletin 85/45**

(84) Designated Contracting States:
**DE FR GB**

(56) References cited:
**US-A-4 265 388**

(73) Proprietor: **TOYOTA JIDOSHA KABUSHIKI KAISHA**
**1, Toyota-cho Toyota-shi**
**Aichi-ken 471 (JP)**

(72) Inventor: **Tsumuki, Chiaki**
**1, Toyota-cho**
**Toyota-shi Aichi-ken (JP)**
Inventor: **Ueda, Katsuhiko**
**1, Toyota-cho**
**Toyota-shi Aichi-ken (JP)**
Inventor: **Nakamura, Hitoshi**
**1, Toyota-cho**
**Toyota-shi Aichi-ken (JP)**
Inventor: **Nakura, Toshiyuki**
**1, Toyota-cho**
**Toyota-shi Aichi-ken (JP)**
Inventor: **Tsuda, Kazuhiko**
**1, Toyota-cho**
**Toyota-shi Aichi-ken (JP)**

(74) Representative: **Tiedtke, Harro, Dipl.-Ing. et al**
**Patentanwaltsbüro Tiedtke-Bühling-Kinne-Grupe-Pellmann-Grams-Struif Bavariaring 4**
**Postfach 20 24 03**
**D-8000 München 2 (DE)**

Courier Press, Leamington Spa, England.

## Description

### Background of the invention

The present invention relates to a method for fixing an annular element onto a shaft according to the pre-characterizing portion of claim 1 and a shaft assembly according to the pre-characterizing portion of claim 6. The shaft may be, for example, a camshaft and the annular element may be, for example, a cam piece or a journal piece used in an automobile.

In automobiles, many camshafts are produced by means of sintering, in which, at first, a preliminarily sintered cam piece or journal piece is fixed onto a shaft temporarily before being permanently fixed as a result of the completion of sintering. In such an operation, it is necessary that the temporarily fixed cam piece be anchored to the shaft so that it is not displaced relative to the shaft either in the axial direction or in the rotating direction. For this purpose, conventional assembling of a camshaft assembly of the above-described type has been carried out according to the following method, which is disclosed in the US—A—4 265 388, comprising the steps of: forming an axially extending groove on an outer wall of the shaft and forming an axially extending projection on an inner surface of a through hole of the piece, the groove and projection having respective cross sections which enable them to fit tightly together; inserting the shaft into the through hole of the piece while engaging the projection tightly with the groove, thereby securing the piece to the shaft temporarily before permanently fixing it onto the shaft as a result of completion of sintering.

However, the above method is disadvantageous in that there is an unavoidable dimensional variance between the groove and the projection. If the variance is large, the projection is loosely fitted to the groove, resulting in a reduction of holding capacity between the two elements; on the other hand, if the projection is fitted too tightly to the groove, breakage of the projection and groove results.

### Summary of the invention

It is an object of the present invention to provide a method according to the pre-characterizing portion of claim 1, which ensures in a simple way, that a predetermined axial position once given to the annular element is reliably kept by the annular element until it is permanently fixed on the shaft by sintering or brazing and to provide a shaft assembly obtained by such method, which shaft assembly should have lower manufacturing costs.

This object is attained by the features of the characterizing portion of claim 1, respectively the features of the characterizing portion of claim 6.

Advantageous modifications of the method and the shaft assembly, according to the invention result from the features of the subclaims.

The present invention will now be described in greater detail with reference to the accompanying drawings which illustrate the preferred embodiments of the invention, in which:

Fig. 1 shows a top view of a preferred embodiment of a camshaft assembly, according to the present invention;

Fig. 2 shows a section taken along the line A—A in Fig. 1;

Fig. 3 shows an enlarged partial section taken along the line B—B in Fig. 1;

Figs. 4a and 4b show schematically how a tool is pressed to cause an outer wall surrounding a groove of a shaft to be deformed at different angles;

Fig. 5 shows a schematic top view in which a tool having a bevelled edge is used to deform the outer wall of the shaft adjacent to the groove; and

Fig. 6 shows a schematic view in which a tool having a V-shaped edge is used to deform the outer wall of the shaft adjacent to the groove.

### Description of a preferred embodiment

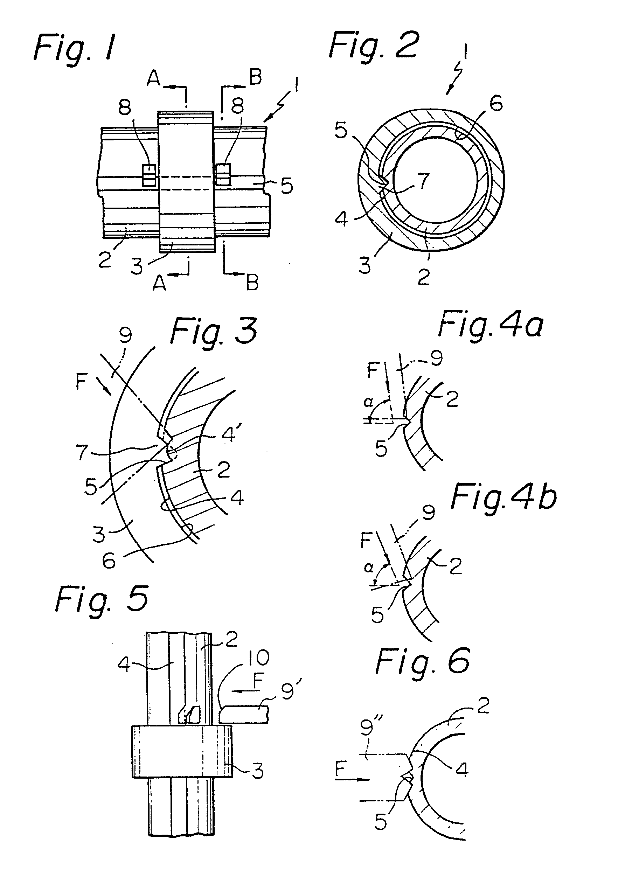

Referring to Figs. 1 and 2, a shaft assembly 1 is shown which can be applied to a camshaft assembly in an internal combustion engine though it is not limited to a camshaft. In the camshaft assembly production process, a shaft 2 is made of a hollow pipe, onto which an annular element 3, for example, a cam piece or a journal piece, is fixed. Such annular piece 3 is made by sintering. At first, it is compacted in the mold and preliminarily sintered; then it is assembled onto the shaft 2 before completion of sintering and the above assembly is finally sintered so that the piece 3 is fixed onto the shaft 2 permanently.

On the cylindrical outer wall 4 of the shaft 2 there is formed a groove 5 with a triangular cross section which extends axially parallel to the axis of the shaft 2. The annular element 3 has a hole 6 through which the shaft 2 is inserted. Between the outer wall 4 of the shaft 2 and the inner surface of the hole 6 of the annular element 3 there is a certain clearance for loose fitting of the two elements 2 and 3. Further, on the inner surface of the hole 6 of the annular element 3 there is formed an axially extending projection 7 integral with the element 3 over the whole length thereof, a cross section of which projection substantially corresponds to that of the groove 5. The groove 5 and projection 7 are formed with such a tolerance that they can fit loosely when the shaft 2 is inserted into the hole 6 of the annular element 3 since it is not necessary that they fit tightly as in the conventional case.

The shaft 2 is inserted into the hole 6 of the annular element 3 while engaging the projection 7 with the groove 5, thereby preventing a relative rotating motion between the annular element 3 and the shaft 2. After determining the axial position of the annular element 3 with respect to the shaft 2, the two elements 2 and 3 are held by a suitable holding tool (not shown). In this state, the outer wall 4 adjacent to the groove 5 is deformed at two positions represented by the numeral 8 in Fig. 1, these two positions 8 being located near the terminating ends of the axially extending projection 7.

Figure 3 shows a camshaft assembly 1 in which the above-described deformation is caused by a tool 9 which presses the outer wall 4 of the shaft 2 in a direction perpendicular to the axially extending groove 5 as shown by the arrow. The initial shape (shown by the broken line) of the outer wall 4 surrounding the groove 5 is deformed so that said outer wall protrudes into the groove 4, as shown by the numeral 4', and protrudes toward the end of the axially extending projection 7 at both sides of the annular element 3 so that the relative axial movement of the element 3 and the shaft 2 is obstructed, that is, the element 3 is fixed onto the shaft 2. Then the elements of the camshaft assembly 1 are permanently joined to each other by means of a suitable process such as final sintering, brazing, or any other operation.

On effecting such deformation of the outer wall 4 of the shaft 2, the tool 9 presses the outer wall 4 at an angle α with respect to the normal line at the groove center. If the angle α is large, as shown in Fig. 4a, the force F may be small, but a part of the wall may be removed by shearing. If the angle α is small, as shown in Fig. 4b, a great force F is needed to deform the outer wall, and the tool life is decreased. The present invention proposes a tool which is used in the above-described operation. One example of the tool 9 is shown in Fig. 5, in which the tool 9' has a bevelled edge 10. With the aid of this tool 9', as shown in Fig. 5, deformation is effected by applying a small force F without shearing of the wall.

In Fig. 6, the tool 9'' has a V-shaped edge, by which the outer wall 4 is deformed to protrude into the groove 5 on both sides of the groove 5.

In the illustrated embodiments, cross sections of the groove 5 and the projection 7 are triangular cross sections corresponding to each other. However, they can be cross sections of various shapes which enable the projection and the groove to engage with each other so as to prevent a relative rotating motion.

## Claims

1. Method for fixing an annular element (3) onto a shaft (2), said element (3) having a through hole (6) into which said shaft (2) is loosely inserted, said method comprising the steps of: forming an axially extending groove (5) on an outer wall (4) of said shaft (2) and forming an axially extending projection (7) on an inner surface of said hole (6) of said element (3) over the whole length thereof, said groove (5) and said projection (7) having respective cross sections being adapted so as to loosely fit together; inserting said shaft (2) into said hole (6) while engaging said projection (7) with said groove (5) so as to prevent a relative rotating motion, characterized by after determining the axial position of said element (3) relative to said shaft (2), deforming said outer wall (4) of said shaft (2) adjacent to said groove (5) at two positions (8) near the terminating ends of said projection (7) so that said outer wall (4) protrudes into said groove (5), thereby fixing said element (7) onto said shaft (2).

2. Method according to claim 1, wherein said outer wall (4) is deformed on one side of said groove (5).

3. Method according to claim 2, wherein a tool (9') having a bevelled edge (10) is used.

4. Method according to claim 1, wherein said outer wall (4) is deformed on both sides of said groove (5).

5. Method according to claim 4, wherein a tool (9'') having a V-shaped edge is used.

6. A shaft assembly (7) comprising a shaft (2) and an annular element (3) fixed onto said shaft (2), said element having a through hole (6) into which said shaft is inserted, wherein said shaft has an axially extending groove (5) on an outer wall (4) of said shaft and said element has an axially extending projection (7) on an inner surface of said hole (6) of said element over the whole length thereof, said groove and said projection having respective cross sections characterized in that the cross sections of groove (5) and projection (7) enable them to fit loosely together, and the outer wall (4) of said shaft (2) adjacent to said groove (5) is deformed at two positions (8) near the terminating ends of said projection (7) so that said outer wall protrudes into said groove (5) with said shaft (2) being inserted into said hole (6) of said element (3).

7. A shaft assembly according to claim 6, wherein said outer wall (4) is deformed on one side of said groove 5.

8. A shaft assembly according to claim 6, wherein said outer wall (4) is deformed on both sides of said groove (5).

## Patentansprüche

1. Verfahren zur Befestigung eines ringförmigen Elements (3) auf einer Welle (2), wobei das Element (3) eine Durchgangsbohrung (6) aufweist, in die die Welle (2) locker eingesetzt ist, wobei das Verfahren folgende Stufen aufweist: Ausbildung einer axial verlaufenden Nut (5) auf einer Außenwand (4) der Welle (2) und Ausbildung eines axial verlaufenden Vorsprungs (7) auf einer Innenfläche der Bohrung (6) des Elements (3) über dessen gesamte Länge, wobei die Nut (5) und der Vorsprung (7) einander zugeordnete Querschnitte aufweisen, die derart ausgewählt sind, daß sie locker ineinander passen; Einsetzen der Welle (2) in die Bohrung (6), wobei der Vorsprung (7) in die Nut (5) eingreift, um eine Relativdrehung zu vermeiden, dadurch gekennzeichnet, daß nach Bestimmung der Axialstellung des Elements (3) relativ zur Welle (2) die Außenwand (4) der Welle (2) neben der Nut (5) an zwei Stellen (8) nahe den Begrenzungsenden des Vorsprungs (7) verformt wird, so daß die Außenwand (4) in die Nut (5) vorsteht, um dadurch das Element (3) auf der Wellen (2) zu fixieren.

2. Verfahren nach Anspruch 1, bei dem die Außenwand (4) auf einer Seite der Nut (5) verformt wird.

3. Verfahren nach Anspruch 2, bei dem ein Werkzeug (9') mit einer abgeschrägten Kante (10) angewendet wird.

4. Verfahren nach Anspruch 1, bei dem die Außenwand (4) auf beiden Seiten der Nut (5) verformt wird.

5. Verfahren nach Anspruch 4, bei dem ein Werkzeug (9'') mit einer V-förmigen Kante angewendet wird.

6. Wellenanordnung (1) mit einer Welle (2) und einem ringförmigen Element (3), das auf der Welle (2) befestigt ist und eine Durchgangsbohrung (6) aufweist, in die die Welle eingesetzt ist, wobei die Welle auf einer Außenwand (4) eine axial verlaufende Nut (5) und das Element auf einer Innnenfläche seiner Bohrung (6) über seine gesamte Länge einen axial verlaufenden Vorsprung (7) und die Nut und der Vorsprung einander entsprechende Querschnitte aufweisen, dadurch gekennzeichnet, daß die Querschnitte der Nut (5) und des Vorsprungs (7) diesen ermöglichen, locker ineinandergepaßt zu werden, und daß die Außenwand (4) der Welle (2) neben der Nut (5) an zwei Stellen (8) nahe den Begrenzungsenden des Vorsprungs (7) derart verformt ist, daß die Außenwand in die Nut (5) vorsteht, wobei die Welle (3) in die Bohrung (6) des Elements (3) eingesetzt ist.

7. Wellenanordnung nach Anspruch 6, bei der die Außenwand (4) auf einer Seite der Nut (5) verformt ist.

8. Wellenanordnung nach Anspruch 6, bei der die Außenwand (4) auf beiden Seiten der Nut (5) verformt ist.

## Revendications

1. Procédé de fixation d'un élément annulaire (3) sur un arbre (2), ledit élément (3) comportant un trou traversant (6) dans lequel ledit arbre (2) est inséré avec jeu, ledit procédé comportant les étapes consistant à: former une rainure (5) s'étendant axialement sur une paroi extérieur (4) dudit arbre (2) et former une partie en saillie (7) s'étendant axialement sur une surface intérieure dudit trou (6) dudit élément (3) sur toute sa longueur; ladite rainure (5) et ladite partie en saillie (7) présentant des sections transversales respectives prévues pour s'ajuster réciproquement avec jeu; à insérer ledit arbre (2) dans ledit trou (6) tout en engageant ladite partie en saillie (7) dans ladite rainure (5), de façon à empêcher un déplacement en rotation relatif, caractérisé en ce que l'on détermine la position axiale dudit élément (3) par rapport audit arbre (2), on déforme ladite paroi extérieure (4) dudit arbre (2) adjacent à ladite rainure (5) en deux points (8) à proximité des extrémités de bout de ladite pièce en saillie (7) de façon à ce que ladite paroi extérieure (4) fasse saillie dans ladite rainure (5) en fixant ainsi ledit élément (7) sur ledit arbre (2).

2. Procédé selon la revendication 1, dans lequel ladite paroi extérieure (4) est déformée sur l'un des côtés de ladite rainure (5).

3. Procédé selon la revendication 2, dans lequel on utilise un outil (9') présentant un bord chanfreiné (10).

4. Procédé selon la revendication 1, dans lequel ladite paroi extérieure (4) est déformée sur les deux faces de ladite rainure (5).

5. Procédé selon la revendication 4, dans lequel on utilise un outil (9'') présentant un bord en forme de V.

6. Un assemblage d'arbre (1) comportant un arbre (2) et un élément annulaire (3) fixé sur ledit arbre (2), ledit élément présentant un trou traversant (6) dans lequel ledit arbre est inséré, où ledit arbre présente une rainure (5) s'étendant axialement sur une paroi extérieure (4) dudit arbre et ledit élément comporte une partie en saillie (7) s'étendant axialement sur une surface inférieure dudit trou (6) dudit élément sur toute sa longueur, ladite rainure et ladite partie en saillie présentant des sections transversales respectives, caractérisé en ce que lesdites sections transversales de la rainure (5) et la partie en saillie (7) leur permettent de s'ajuster avec jeu l'une dans l'autre et la paroi extérieure (4) dudit arbre (2) adjacent à ladite rainure (5) est déformée en deux points (8) à proximité des extrémités de bout de ladite partie en saillie (7) de telle façon que ladite paroi extérieure fasse saillie dans ladite rainure (5) avec ledit arbre (2) inséré dans ledit trou (6) dudit élément (3).

7. Un assemblage d'arbre selon la revendication 6, dans lequel ladite paroi extérieure (4) est déformée sur une face de ladite rainure (5).

8. Un assemblage d'arbre selon la revendication 6, dans lequel ladite paroi extérieure (4) est déformée sur les deux faces de ladite rainure (5).

4

Fig. 1

Fig. 2

Fig. 3

Fig. 4a

Fig. 4b

Fig. 5

Fig. 6